# EUROPEAN PATENT SPECIFICATION

(11) **EP 2 277 725 B1**
(45) Date of publication and mention of the grant of the patent: **08.04.2015**
(21) Application number: 10178610.1
(22) Date of filing: 13.02.2001
(51) Int. Cl.: B60G 17/015, G01C 21/30

(54) **Surface vehicle vertical trajectory planning**
Planung von vertikalen Trajektorien für ein Landfahrzeug
Planification de la trajectoire verticale pour un véhicule terrestre

(30) Priority: 27.03.2000 US 535849
(43) Date of publication of application: 26.01.2011
(62) Divisional of application: 01301287.7
(73) Proprietor: Bose Corporation, Framingham, MA 01701-9168 (US)
(72) Inventor: Knox, Lawrence D., Framingham, MA 01701-9168 (US); Lackritz, Neal M., Framingham, MA 01701-9168 (US); Parison, James A., Framingham, MA 01701-9168 (US); Short, William R., Framingham, MA 01701-9168 (US)
(74) Representative: Finnie, Peter John

(56) References cited:
- EP-A- 0 662 602
- WO-A-98/23918
- DE-A- 3 439 000
- DE-A- 19 600 734
- DE-A1- 19 605 376
- JP-A- S58 407
- JP-A- H0 419 214
- JP-A- H05 262 113
- US-A- 4 647 068
- US-A- 4 690 429
- US-A- 6 000 703

## Description

### BACKGROUND

The invention relates to active vehicle suspensions, and more particularly to active vehicle suspension systems, including those with vertical trajectory planning systems.

It is an important object of the invention to provide an improved active vehicle suspension.

US 4647068 and US 4690429 disclose semi-active vehicle suspension systems that vary a spring constant in advance of arriving at a bump, the spring rate is softened before hitting the bump to minimize the forces that are transferred to the car body when the wheel traverses the bump. By softening the spring, the car body sags down, moving the wheel closer to its top end vertical travel. The system thus has less travel available to absorb the bump before the suspension hits its bump stops than if nothing were changed.

### SUMMARY

According to the invention there is provided an active suspension, for a surface vehicle for operating along a path and including a payload compartment and a surface engaging device, said active suspension comprising:
a controllable suspension element for modifying the displacement between said payload and said path responsive to vertical disturbances in said path, said controllable suspension element being a force applying element coupling said payload compartment to said surface engaging device for applying a force between said payload compartment and said surface engaging device to shorten or lengthen the distance between said payload compartment and said surface engaging device; and
a subsystem for issuing commands to said controllable suspension element to cause said controllable suspension element to exert a force responsive to a vertical disturbance in said path, characterised in that
said subsystem is arranged
   to exert a force to cause the distance between said payload compartment and said surface engaging device to increase prior to said surface engaging device encountering a said vertical upwards disturbance,
   to exert a force to cause the distance between said payload compartment (16) and said surface engaging device (14) to decrease as said surface engaging device travels over said vertically upwards disturbance, and
   to begin to exert a force to cause the distance between said payload compartment (16) and said surface engaging device (14) to increase again as said surface engaging device passes the crown of said vertically upwards disturbance.

The subsystem may be a trajectory developing subsystem that issues commands to cause said controllable suspension element to urge a point on said payload to follow a trajectory plan, the trajectory plan comprising a pre determined path in space.

The path may a profile described by profile data, and the trajectory developing system may further comprise a trajectory plan developing microprocessor for developing a trajectory plan based on the profile data.

The trajectory developing system preferably includes a smoothing device to smooth said profile data to develop said trajectory plan. The smoothing device may be a low pass filter and bi-directional.

The trajectory developing subsystem may further comprise a locator system for determining the location of said surface vehicle; a trajectory plan storage device, for storing a database of trajectory plans corresponding to locations; and a trajectory plan microprocessor for determining if said database contains a trajectory plan corresponding to said determined location, for retrieving said corresponding trajectory plan, and for transmitting to said active suspension instruction signals based on said corresponding trajectory plan.

The locator system may be a global positioning system device and may also have a profile sensor for sensing a profile of said path; a road profile storage device for storing a database of path profiles; and a path profile microprocessor coupled to said storage device and to said profile sensor for comparing said sensed profile with said database of path profiles.

The path profile microprocessor, based on the comparison, retrieves a profile corresponding to the path the vehicle is currently travelling on, and the profile sensor acquires vertical deflection data associated with the path. The path profile microprocessor is adapted to compare said acquired vertical deflection data with said stored profiles.

The path profile microprocessor may be adapted to modify said retrieved profile and to store said modified profile in said profile storage device.

The profiles may include vertical deflection data. The system further includes a profile retrieving microprocessor, coupled to the controllable suspension element and to the profile storage device, for retrieving from the profile storage device one of the profiles, the one profile corresponding to the path on which the vehicle is travelling.

The invention also includes a method for operating a surface vehicle along a path having disturbances, the surface vehicle having an active suspension as defined above.

### BRIEF DESCRIPTION OF THE DRAWINGS

Other features, objects, and advantages will become apparent from the following detailed description, which refers to the following drawings in which:
FIG. 1 is a diagrammatic view of a vehicle having a controllable suspension;
FIG. 2a is a partially block diagram, partially diagrammatic representation of a controllable suspension according to the invention;
FIG. 2b is a partially block diagram, partially diagrammatic representation of a controllable suspension according to the invention;
FIG. 3 is a diagrammatic view of the operation of a prior art active suspension;
FIG. 4 is a diagrammatic view of the operation of the operation of an active suspension according to the invention;
FIGS. 5a, 5b, and 5c are flow diagrams illustrating the operation of a suspension system according to the invention; and
FIG. 6 is a diagrammatic view illustrating a method of trajectory development.

### DETAILED DESCRIPTION

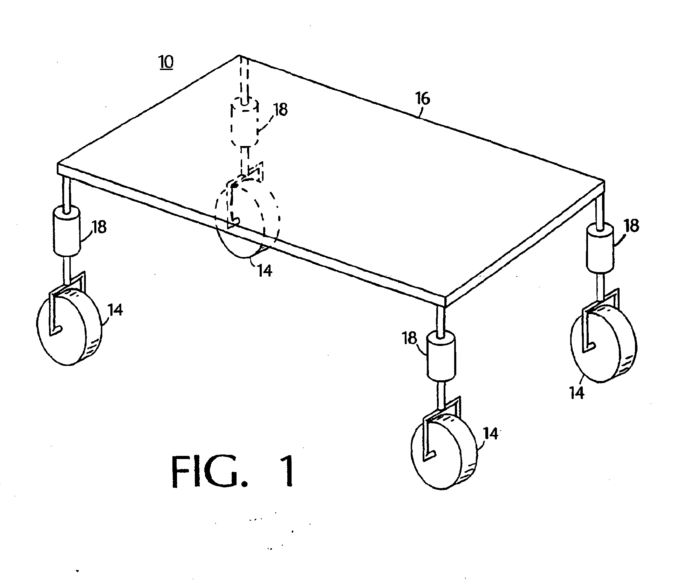

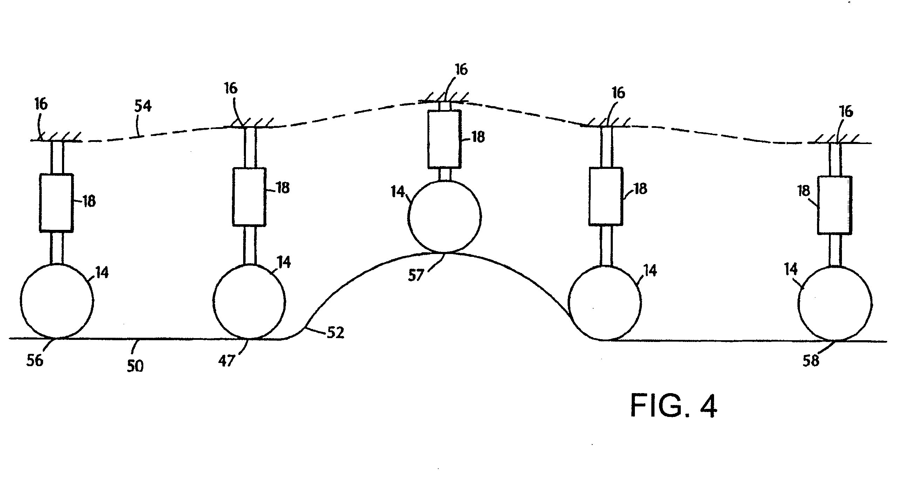

With reference now to the drawings and more particularly to FIG. 1 and FIG. 4, there is shown a diagrammatic view of a vehicle 10 according to the invention. A suspension system includes surface engaging devices, such as wheels 14 connected to payload compartment 16 (represented diagrammatically as a plane) of the vehicle by a controllable suspension element 18. In addition, the suspension system may include conventional suspension elements (not shown), such as a coil or leaf spring arrangement or damper. While one embodiment of the invention is an automobile, so that the surface engaging devices are wheels and the payload includes passengers, the invention may also be practiced in other types of vehicles, such as cargo carrying vehicles. Payload compartment 16 may be a planar structure or may be enclosed on some or all sides. The surface engaging devices may include tracks or runners. The invention may also be practiced in vehicles that engage the surface through some form of levitation, such as magnetic or pneumatic levitation, so that the surface engaging devices include devices that do not require physical contact with the surface, and so that the surface may include tracks or open terrain. For simplicity of explanation, the invention will be described as embodied in an automobile as described in connection with FIG. 1, with the operation as specifically described in connection with FIG. 4.

Controllable suspension elements 18 may be one of a variety of suspension elements that receive, or are capable of being adapted to receive, control signals from a microprocessor and to respond to the signals.

Controllable suspension elements 18 may be components of an active suspension system, in which the controllable suspension elements can respond to the control signals by varying the vertical displacement between the passenger compartment 16 and wheel 14 by applying a force. Suitable active suspension systems are described in U.S. Pat. Nos. 4,960,290 and 4,981,309. The force may be transmitted through some element such as a linear or rotary actuator, ball screw, pneumatic system, or hydraulic system, and may include intervening elements between the wheel and the force producing element. The controllable active suspension may also comprise an adaptive active vehicle suspension such as described in U.S. Pat. No. 5,432,700, in which signals may be used to modify adaptive parameters and gains.

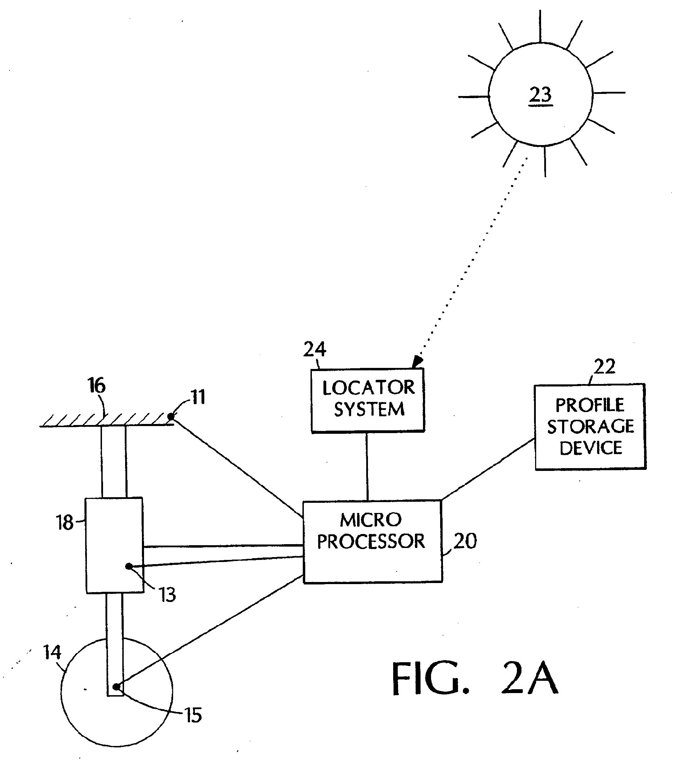

By way of example, the invention will be described in an embodiment in which the controllable suspension element is an active suspension element. Referring now to FIG. 2a, there is shown a block diagram of a suspension according to the invention. Controllable suspension element 18 is coupled to a microprocessor 20 which is in turn coupled to profile storage device 22 and optional locator system 24. The suspension system further includes sensors 11, 13, and 15 associated with payload compartment 16, controllable suspension elements 18, and wheels 14, respectively. Sensors, 11, 13, and 15 are coupled to microprocessor 20. Locator system 24 may receive signals from an external source, such as a positioning satellite 23. For convenience, only one of the controllable suspension elements 18 is shown. The remaining wheels 14, controllable suspension elements 18, and the respective sensors 11, 13, and 15 are coupled to microprocessor 20 substantially as shown in FIG. 2a.

Microprocessor 20 may be a single microprocessor as shown. Alternatively, the functions performed by microprocessor 20 may be performed by a number of microprocessors or equivalent devices, some of which can be located remotely from vehicle 10, and may wirelessly communicate with components of the suspension system, which are located on vehicle 10.

Profile storage device 22 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle. Locator system 24 may be one of a number of systems for providing longitudinal and latitudinal position, such as the Global Positioning System (GPS) or an inertial navigation system (INS). Locator system 24 may include systems, which provide for user input to indicate location and may also include profile matching systems that compare the profile of the path being driven by the vehicle with the profiles stored in memory storage.

In one embodiment, the path being driven on is a roadway. However, the invention may be used in other types of vehicles that do not operate on roadways, such as open terrain vehicles and vehicles that operate on rails. The path can be typically defined by a location and a direction. By way of example, the invention will be described as embodied in an automobile for operating on a roadway.

A suspension system incorporating the invention may also include a trajectory planning subsystem, which includes (referring to FIG. 2a) microprocessor 20, profile storage device 22, and locator system 24.

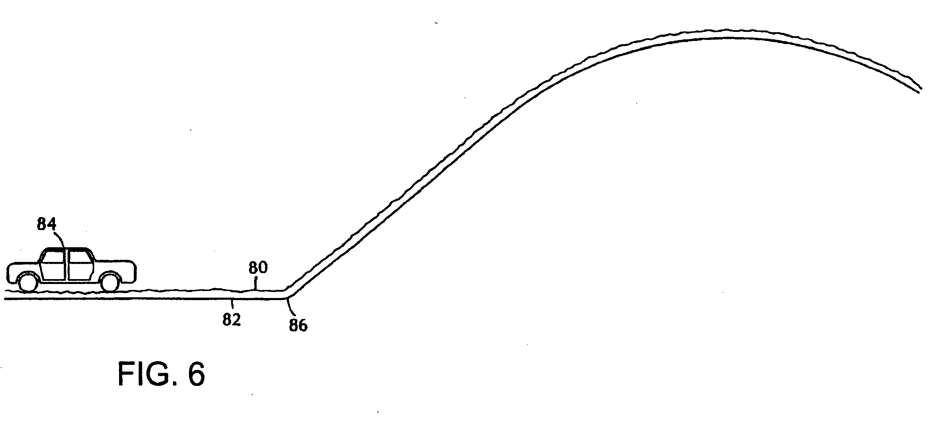

Locator system 24 detects the location of the vehicle, and microprocessor 20 retrieves a copy of the profile of the road, if available, from a plurality of profiles stored in profile storage device 22. Microprocessor 20 calculates or retrieves a trajectory plan responsive to the road profile, and issues control signals to controllable suspension element 18 to execute the trajectory plan. The profile retrieval, trajectory calculation, and suspension control may be performed by a single microprocessor as shown, or may be done by separate microprocessors if desired. The trajectory development process is described more filly in connection with FIGS. 6a and 6b. The microprocessor 20 may issue an adjusted control signal to controllable suspension 16 based in part on the road profile.

In a typical form, a road profile includes a series of vertical (z-axis) displacements from a reference point. The z-axis displacement measurements are typically taken at uniform distances from the location taken in the direction of travel. A road profile can also contain additional data such as x-axis and γ-axis displacement; compass heading; steering angle; or other information such as may be included in navigation systems, such as commercially available vehicle navigation products. The additional data may involve greater processing capability of microprocessor 20 and profile storage device 22, but may be advantageous in using "dead reckoning" or pattern matching techniques described below to more precisely locate the vehicle or in uniquely associating a road profile with a location. Additionally, the additional data may be advantageous in determining, for example, the degree to which traction should be considered in developing the trajectory.

A trajectory plan is a path in space of a point or set of points on the payload compartment. To control the pitch of the vehicle, the trajectory may represent at least two points, respectively forward and rearward in the payload compartment. To control the roll of the vehicle, the trajectory may represent at least two points, one on each side of the vehicle. In a four wheeled vehicle, it may be convenient to use for trajectory development four points in the payload compartment, one near each wheel. Pairs of the points could be averaged (such as averaging the two points on each side of the vehicle to consider roll in the development of the trajectory plan, or averaging the two points in the front and the rear, respectively, to consider pitch in the development of the trajectory plan). For simplicity of explanation, the invention will be described in terms of a single point. The microprocessor issues control signals to controllable suspension element 18 to cause the vehicle to follow the trajectory plan. More detail on trajectory plans and the execution of trajectory plans are set forth in the examples that follow.

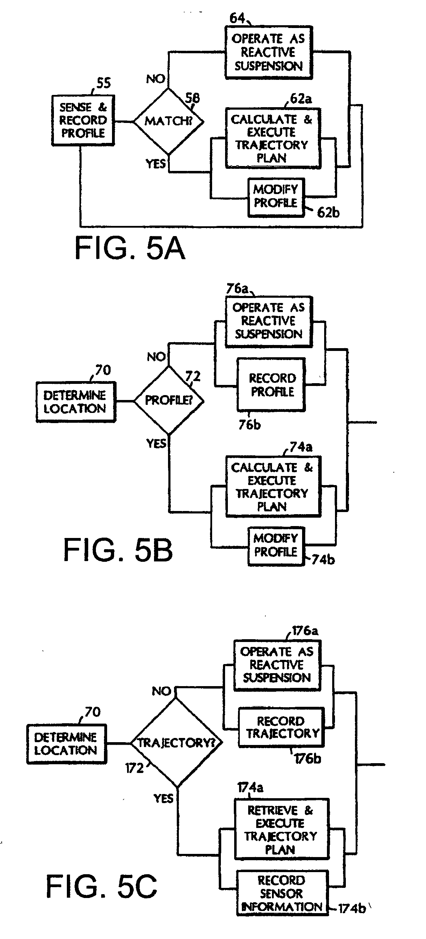

The trajectory plan may take a number of factors into account, for example matching the pitch or roll of the vehicle to the pitch or roll expected by the passengers; minimizing the vertical acceleration of the payload compartment; maximizing the stroke of the suspension available to absorb undulations in the road; minimizing the amplitude or occurrence of accelerations of an undesirable frequency, such as frequencies around 0.1 Hz, which tends to induce nausea; maximizing tire traction; or others. The trajectory plan may also include "anticipating" an undulation in the road and reacting to it before it is encountered, as will be described below in the discussion of FIG. 5. Further, particularly if the suspension system includes a conventional spring to support the weight of the car and the operation of the active suspension element extends or compresses the conventional spring, the trajectory plan may take power consumption into account.

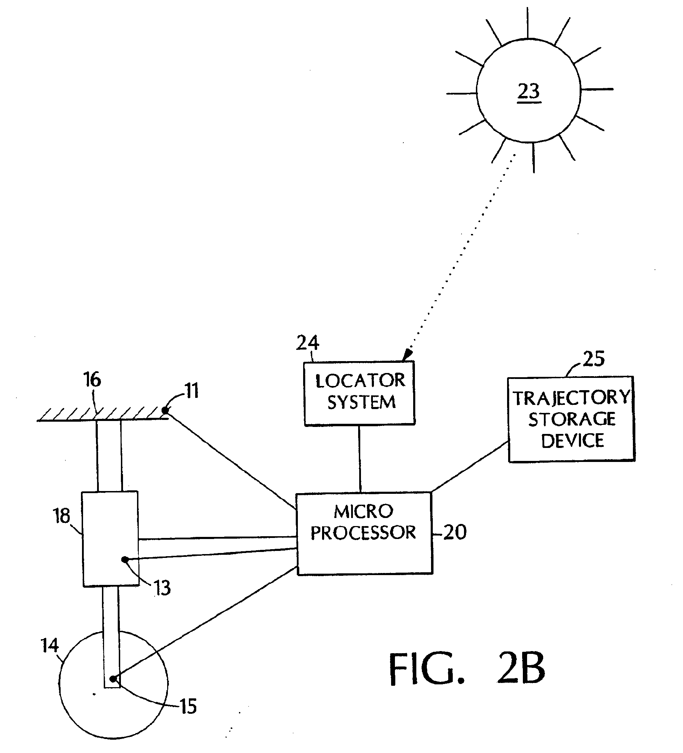

Referring now to FIG. 2b, there is shown another embodiment of the invention incorporating a trajectory storage device 25. Elements of FIG. 2b are similar to elements of FIG. 2a, except profile device 22 of FIG. 2a is replaced by a trajectory storage device 25. Trajectory storage device 25 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle.

Operation of the embodiment of FIG. 2b is similar to the operation of the embodiment of FIG. 2a, except that microprocessor 20 retrieves and calculates trajectory plans that are associated with locations rather than being associated with profiles.

Another embodiment of the invention includes both the profile storage device of FIG. 2a and the trajectory storage device of FIG. 2b. In an embodiment including both profile storage device 22 and trajectory storage device 25, the storage devices may be separate devices or may be different portions of a single memory device. Operation of embodiments including trajectory storage device 25 are described further in the discussion of FIG. 6c.

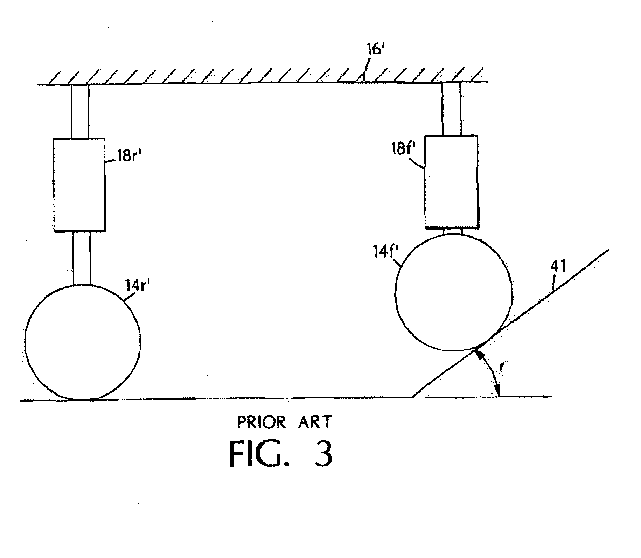

FIG. 3 shows an example of the operation of a conventional active suspension without a trajectory planning subsystem. In FIG. 3, when front wheel 14f encounters sloped section 41, active suspension element 18f exerts a force to shorten the distance between payload compartment 16' and front wheel 14f. When the rise r due to the slope approaches the maximum lower displacement of the suspension element, suspension element 14f is "nosed in" to slope 41, and in extreme cases may reach or approach a "bottomed out" condition, such that there is little or no suspension travel left to accommodate bumps in the rising surface.

FIG. 4 shows the operation of an active suspension with a trajectory planning subsystem. Road profile 50 includes a large bump 52. Microprocessor 20 (of FIG. 2a or 2b) furnishes a computed trajectory 54 appropriate for road profile 50 and issues corresponding control signals to controllable suspension element 18. In response to the control signals, at point 56, before wheel 14 has encountered bump 52, controllable suspension element 18 exerts a force to gradually lengthen the distance between wheel 14 and payload compartment 16. As wheel 14 travels over bump 52, the normal operation of the controllable suspension element 18 causes controllable suspension element 18 to exert a force, which shortens the distance between payload compartment 16 and wheel 14. When wheel 14 reaches the crown 57 of bump 52, controllable suspension element 18 begins to exerts a force, which lengthens the distance between payload compartment 16 and wheel 14. After wheel 14 has passed the end of bump 52, controllable suspension element 18 exerts a force shortening the distance between payload compartment 16 and wheel 14. The example of FIG. 54 illustrates the principle that the trajectory planning subsystem may cause the controllable suspension element 18 to exert a force to lengthen or shorten the distance between wheel 14 and payload compartment 16 even on a level road and further illustrates the principle that the trajectory plan may cause the controllable suspension element to react to a bump or depression in the road before the bump or depression is encountered.

The example, as described in FIG. 4, illustrates several advantages of a suspension system according to the invention. By beginning to react to bump 52 before bump 52 is encountered and by continuing to react to the bump after the bump has been passed, the vertical displacement of the payload compartment is spread over a larger distance and over a longer period of time than if the suspension system reacted to bump 52 when the tire encountered bump 52. Thus, the vertical displacement, vertical velocity and vertical acceleration of payload compartment 16 are low, so passengers encounter less discomfort than with a suspension system without trajectory planning. The trajectory planning subsystem effectively provides for large bump 52, and the normal operation of the controllable suspension element is still available to handle perturbations that are not indicated in the road profile. If the road profile has sufficient resolution to only identify large perturbations such as large bump 52, or long or substantial slopes, or if the road profile is somewhat inaccurate, the active suspension element in normal operating mode need only react to the *difference* between the profile and the actual road surface. For example, if the actual profile of large bump 52 is slightly different horn the stored profile on which the trajectory plan is based, the active suspension, system need only provide for the difference between the actual and the stored profile of bump 52. Thus, even if the profile is imperfect, the ride experienced by the passengers in the vehicle is typically better than if the suspension lacks the trajectory planning feature.

The trajectory plan may take perceptual thresholds of vehicle occupants into account. For example, as shown in FIG. 4, even less vertical acceleration would be encountered by the occupants of the vehicle if the trajectory plan began rising before point 56 and returned the vehicle to the equilibrium position after point 58. However, the difference in vertical acceleration may not be enough to be perceived by the vehicle occupants, so the active suspension need not react before point 56 or continue to react past point 58. Additionally, if the vehicle includes a conventional suspension spring, the force applied by the active suspension between points 56 and 47 may need to exert a force to extend the spring in addition to a force to lift the vehicle, so not beginning the rise of the trajectory plan until point 56 may consume less power than beginning the rise earlier.

Referring now to FIG. 5a, there is shown a method for developing, executing, and modifying a trajectory plan by a system without optional locator system 24. At step 55, sensors 11, 13, 15 collect road profile information and transmit the information to microprocessor 20 which records the road profile in profile storage device 22. At step 58, the profile microprocessor compares the road profile information with road profiles that have been previously stored in profile storage device 22. The comparison may be accomplished using a pattern matching system as described below. If the road profile information matches a road profile that has previously been stored, at step 62a, the profile is retrieved, and microprocessor 20 furnishes a computed trajectory plan appropriate for that profile. Concurrently, at step 62b, sensors 11, 13, 15 furnish signal representations of the road profile that may be used to modify, if necessary, the profile stored in profile storage device 22.

If it is determined at step 58 that there is no previously stored road profile that matches the road profile information collected in step 56, at step 64 controllable suspension element 18 acts as a reactionary active suspension.

Referring now to FIG. 5b, there is shown a method for developing, modifying, and executing a trajectory plan by a system that includes optional locator system 24. At step 70, locator system 24 determines the location and direction of the vehicle. At step 72 trajectory microprocessor 20 examines stored profiles in profile storage device 22 to see if there is a profile associated with that location. If there is a profile associated with that location, at step 74a microprocessor 20 retrieves the profile and transmits the retrieved profile information to controllable suspension element 18, which executes the trajectory plan. Depending on how the data is stored and processed, step 72 may also consider direction of travel in addition to location in determining whether there is an associated profile. Concurrently, at step 74b, sensors 11, 13, 15 provide signals representative of the road profile that may be used to modify, if necessary, the profile stored in profile storage device 22.

If it is determined at step 72 that there is no previously stored road profile associated with that location and direction, at step 76a controllable suspension 18 acts as a reactionary active suspension. Concurrently, at step 76b, sensors 11, 13, 15 furnish signals representative of the road profile, which is stored in profile storage device 22.

Referring now to FIG. 5c, there is shown a method for developing, modifying, and executing a trajectory plan in an embodiment of the invention as shown in FIG. 2b and having some device to locate the vehicle, such as the locator system 24, or the profile storage device 22 of FIG. 2a. At step 70, locator system 24 determines the location and direction of the vehicle. At step 172 trajectory microprocessor 20 examines trajectory plans in trajectory plan storage device 25 to see if there is a trajectory plan associated with that location. If there is a profile associated with that location, at step 174a microprocessor 20 retrieves the profile and transmits the information to controllable suspension element 18, which executes the trajectory plan. Depending on how the data is stored and processed, step 172 may also consider direction of travel in addition to location in determining whether there is an associated profile. Concurrently, at step 174b, signals from sensors 11, 13, 15 representative of the actual profile may be recorded so that the trajectory plan associated with the location can later be modified to provide a smoother or more comfortable ride.

If it is determined at step 172 that there is no previously stored road profile associated with that location and direction, at step 176a controllable suspension 18 acts as a reactionary active suspension. Concurrently, at step 176b, signals representative of the trajectory resulting from the reactionary operation of the controllable suspension 18 are recorded so that the stored trajectory can be modified to provide a smoother or more comfortable ride.

The methods of FIG. 5a, 5b, and 5c illustrate one of the learning features of the invention. Each time the vehicle is driven over a portion of road, the profile or trajectory, or both, may be modified, so that the trajectory furnished by microprocessor 20 may be used to provide for a smoother ride for the occupants of the vehicle during subsequent rides over the same portion of road.

It is desirable to determine the location of the vehicle accurately, ideally within one meter, though an active suspension with a locator system having a lesser degree of precision performs better than conventional active suspensions. One method of attaining a high degree of precision is to include in locator system 24 of FIG. 2a incorporating a high precision GPS system, such as a differential system accurate to within centimeters. Another method is to include in locator system 24 of FIG. 2a a GPS system having a lower degree of precision (such as a non-differential system accurate to within about 50 meters or some other locator system not incorporating GPS) and a supplementary pattern matching system.

In one pattern matching system, search for a known sequence of data in a target string of data. One method of pattern matching particularly useful for data that increases and decreases from a base point includes multiplying a known sequence of n numbers by strings of corresponding length in the target string. The n products are then summed, and when the strings match, the sum peaks. Supplementary or additional pattern matching techniques, such as continuous pattern matching or matching consecutive groups of n products can be used to minimize the occurrence of false matches.

This form of pattern matching can be usefully applied to a trajectory planning active suspension by recording a pattern of z-axis deflections from a base point and using the pattern of z-axis deflections as the search string. Pattern matching can then be used in at least two ways. In one application, the GPS system is used to get an approximate (within 30 meters) location of the vehicle, and pattern matching is then used to locate the vehicle more precisely, by using for the target string, the previously recorded pattern of z-axis deflections stored in profile storage device 22 of FIG. 2a. In a second application, pattern matching is used to compare the pattern of z-axis deflections as measured by sensor 15 of FIG. 2a with patterns of z-axis deflections stored in profile storage device 22 to determine if there is a profile stored in memory.

To supplement the GPS and pattern matching system, a "dead reckoning" system may also be used. In a dead reckoning system, a vehicle change in location is estimated by keeping track of the distance the vehicle travels and the direction the vehicle travels.

When the vehicle has been located precisely, the distance the vehicle travels may be tracked by counting wheel rotations, and the direction of travel may be tracked by recording the wheel angle or steering angle. A dead reckoning system is very useful if GPS readings are difficult (such as if there are nearby tall buildings) and also reduces the frequency at which GPS readings need be taken.

Referring now to FIG. 6, there is shown a diagrammatic view of an automobile and a road surface, illustrating the development of a trajectory. Line 80 represents the road profile as stored by profile device 22 of FIG. 2a. Line 82 represents the road profile 80 which has been bidirectionally low-pass filtered using a break frequency in the range of 1 Hz, and is used as the trajectory; the bidirectional filtering eliminates phase lag inaccuracies that may be present with single directional filtering. When the automobile 84 passes over the road surface represented by line 80, microprocessor 20 of FIG. 2a issues command signals to controllable suspension element 18 of FIG. 2a to urge the payload compartment of automobile 84 to follow the trajectory represented by line 82. The high frequency, low amplitude undulations in the road are easily handled by the normal operation of the active suspension. Developing of a trajectory by low pass filtering is very useful in dealing with the situation as described in FIG. 3.

Processing the road profile data in the time domain to develop trajectory plans is advantageous when the velocity of the vehicle is constant; that is, each trip across the road segment is at the same velocity.

In some circumstances processing the data in the spatial domain may be more useful than processing the data in the time domain. It may be more convenient to store data in spatial form, and processing the data in the spatial domain may make it unnecessary to transform the data to temporal form. Additionally, processing the data in the spatial domain allows the trajectory to be calculated including velocity as a variable; that is, the trajectory may vary, depending on the velocity. If the data is processed in the spatial domain, it may be advisable to perform some amount of time domain translation, for example to minimize acceleration at objectionable frequencies, such as the 0.1 Hz "seasick" frequency

Trajectory development may take into account factors in addition to the spatial or time domain filtered road profile. For example, the trajectory may take into account large dips or bumps in the road as shown in FIG. 4, and discussed in the corresponding portion of the disclosure.

## Claims

1. An active suspension, for a surface vehicle (10) for operating along a path and including a payload compartment (16) and a surface engaging device (14), said active suspension comprising:
a controllable suspension element (18) for modifying the displacement between said payload compartment_and said path responsive to vertical disturbances in said path, said controllable suspension element being a force applying element coupling said payload compartment to said surface engaging device for applying a force between said payload compartment and said surface engaging device to shorten or lengthen the distance between said payload compartment and said surface engaging device; and
a subsystem (20) for issuing commands to said controllable suspension element to cause said controllable suspension element to exert a force responsive to a vertical disturbance in said path, **characterised in that**
said subsystem (20) is arranged
to exert a force to cause the distance between said payload compartment (16) and said surface engaging device (14) to increase prior to said surface engaging device encountering a vertical upwards disturbance,
to exert a force to cause the distance between said payload compartment (16) and said surface engaging device (14) to decrease as said surface engaging device travels over said vertically upwards disturbance, and
to begin to exert a force to cause the distance between said payload compartment (16) and said surface engaging device (14) to increase again as said surface engaging device passes the crown of said vertically upwards disturbance.

2. The active suspension of claim 1, wherein said subsystem (20) is a trajectory developing subsystem that issues commands to cause said controllable suspension element (18) to urge a point on said payload compartment (16) to follow a trajectory plan, the trajectory plan comprising a pre-determined path in space.

3. The active suspension of claim 2, wherein said path has a profile described by profile data, said trajectory developing system further comprising a trajectory plan developing microprocessor for developing a trajectory plan based on the profile data.

4. The active suspension of claim 3, wherein said trajectory developing system includes a smoothing device to smooth said profile data to develop said trajectory plan.

5. The active suspension of claim 4, wherein said smoothing device comprises a low-pass filter.

6. The active suspension of claim 5, wherein said smoothing device comprises a bi-directional low pass filter.

7. The active suspension system of claim 4 or claim 5, wherein the trajectory developing subsystem further comprises:
a locator system (24) for determining the location of said surface vehicle (10);
a trajectory plan storage device (25), for storing a database of trajectory plans corresponding to locations; and
a trajectory plan microprocessor (20) for determining if said database contains a trajectory plan corresponding to said determined location, for retrieving said corresponding trajectory plan, and for transmitting to said active suspension instruction signals based on said corresponding trajectory plan.

8. The active suspension of claim 7, wherein said locator system comprises a global positioning system device.

9. The active suspension of claim 7, wherein the locator system comprises;
a profile sensor for sensing a profile of said path;
a road profile storage device for storing a database of path profiles; and
a path profile microprocessor coupled to said storage device and to said profile sensor for comparing said sensed profile with said database of path profiles.

10. The active suspension of claim 9, wherein the path profile microprocessor, based on the comparison, retrieves a profile corresponding to the path the vehicle is currently travelling on.

11. The active suspension system of claim 9, wherein the profile sensor acquires vertical deflection data associated with the path.

12. The active vehicle suspension system of claim 11, wherein said path profile microprocessor is adapted to compare said acquired vertical deflection data with said stored profiles.

13. The active vehicle suspension system of claim 10, wherein said path profile microprocessor is adapted to modify said retrieved profile and to store said modified profile in said profile storage device.

14. A method for operating a surface vehicle (10) along a path having disturbances, the surface vehicle having an active suspension according to any of claims 1 to 13 for suspending a payload compartment (16), and the surface vehicle further having a surface engaging device (14), the method comprising:
issuing commands to the controllable suspension element (18) responsive to a vertical disturbance in said path, the controllable suspension element outputting a force to lengthen the distance between the payload compartment (16) and the surface engaging device (14) prior to the surface engaging device encountering a vertical upwards disturbance in the path, outputting a force to cause the distance between said payload compartment (16) and said surface engaging device (14) to decrease as said surface engaging device travels over said vertically upwards disturbance, and beginning to output a force to cause the distance between said payload compartment (16) and said surface engaging device (14) to increase again as said surface engaging device passes the crown of said vertically upwards disturbance.

## Patentansprüche

1. Aktives Fahrwerk für ein Landfahrzeug (10) für den Betrieb entlang eines Pfads und einschließlich eines Nutzlastabteils (16) und einer Oberflächeneingriffsvorrichtung (14), wobei das aktive Fahrwerk Folgendes umfasst:
ein steuerbares Fahrwerkelement (18) zur Änderung der Entfernung zwischen dem Nutzlastabteil und dem Pfad in Reaktion auf vertikale Störungen in dem Pfad, wobei das steuerbare Fahrwerkelement ein kraftanwendendes Element ist, welches das Nutzlastabteil mit der Oberflächeneingriffsvorrichtung verbindet, um eine Kraft zwischen dem Nutzlastabteil und der Oberflächeneingriffsvorrichtung anzuwenden, um den Abstand zwischen dem Nutzlastabteil und der Oberflächeneingriffsvorrichtung zu verkürzen oder zu verlängern; und
ein Subsystem (20) zur Ausgabe von Befehlen an das steuerbare Fahrwerkelement, um zu bewirken, dass das steuerbare Fahrwerkelement in Reaktion auf eine vertikale Störung im Pfad eine Kraft ausübt, **dadurch gekennzeichnet, dass**
das Subsystem (20) dafür eingerichtet ist,
eine Kraft auszuüben, um den Abstand zwischen dem Nutzlastabteil (16) und der Oberflächeneingriffsvorrichtung (14) zu vergrößern, bevor die Oberflächeneingriffsvorrichtung auf eine vertikale Aufwärtsstörung trifft,
eine Kraft auszuüben, um den Abstand zwischen dem Nutzlastabteil (16) und der Oberflächeneingriffsvorrichtung (14) zu verkleinern, während die Oberflächeneingriffsvorrichtung über die vertikale Aufwärtsstörung fährt, und
zu beginnen, eine Kraft auszuüben, um den Abstand zwischen dem Nutzlastabteil (16) und der Oberflächeneingriffsvorrichtung (14) wieder zu vergrößern, während die Oberflächeneingriffsvorrichtung den Scheitel der vertikalen Aufwärtsstörung passiert.

2. Aktives Fahrwerk gemäß Anspruch 1, wobei das Subsystem ein Trajektorieentwicklungs-Subsystem ist, das Befehle ausgibt, um zu bewirken, dass das steuerbare Fahrwerkelement (18) einen Punkt am Nutzlastabteil (16) dazu treibt, einem Trajektorieplan zu folgen, wobei der Trajektorieplan einen vorbestimmten Pfad im Raum umfasst.

3. Aktives Fahrwerk gemäß Anspruch 2, wobei der Pfad ein von Profildaten beschriebenes Profil hat, wobei das Trajektorieentwicklungssystem ferner einen Trajektorieplanentwicklungs-Mikroprozessor zur Entwicklung eines Trajektorieplans anhand der Profildaten umfasst.

4. Aktives Fahrwerk gemäß Anspruch 3, wobei das Trajektorieentwicklungssystem eine Glättungseinrichtung beinhaltet, um die Profildaten zur Entwicklung des Trajektorieplans zu glätten.

5. Aktives Fahrwerk gemäß Anspruch 4, wobei die Glättungseinrichtung einen Tiefpassfilter umfasst.

6. Aktives Fahrwerk gemäß Anspruch 5, wobei die Glättungseinrichtung einen bidirektionalen Tiefpassfilter umfasst.

7. Aktives Fahrwerk gemäß Anspruch 4 oder 5, wobei das Trajektorieentwicklungs-Subsystem ferner Folgendes umfasst:
ein Positionsgebersystem (24) zur Ermittlung der Position des Landfahrzeugs (10);
eine Trajektorieplan-Speichervorrichtung (25) zur Speicherung einer Datenbank mit Trajektorieplänen entsprechend der Positionen und
einen Trajektorieplan-Mikroprozessor (20) zur Ermittlung, ob die Datenbank einen Trajektorieplan enthält, der der ermittelten Position entspricht, zum Abrufen des entsprechenden Trajektorieplans und zum Übermitteln von auf dem entsprechenden Trajektorieplan basierenden Anweisungssignalen an das aktive Fahrwerk.

8. Aktives Fahrwerk gemäß Anspruch 7, wobei das Positionierungssystem eine Global-Positioning-System-Vorrichtung umfasst.

9. Aktives Fahrwerk gemäß Anspruch 7, wobei das Positionierungssystem Folgendes umfasst:
einen Profilsensor zum Erfassen eines Profils des Pfads;
eine Straßenprofil-Speichervorrichtung zum Speichern einer Datenbank mit Pfadprofilen und
einen Pfadprofil-Mikroprozessor, der mit der Speichervorrichtung und mit dem Profilsensor verbunden ist, um das erfasste Profil mit der Datenbank der Pfadprofile zu vergleichen.

10. Aktives Fahrwerk gemäß Anspruch 9, wobei der Pfadprofil-Mikroprozessor basierend auf dem Vergleich ein Profil abruft, das dem Pfad entspricht, den das Fahrzeug derzeit befährt.

11. Aktives Fahrwerk gemäß Anspruch 9, wobei der Profilsensor mit dem Pfad verbundene Daten zur vertikalen Abweichung erfasst.

12. Aktives Fahrwerk gemäß Anspruch 11, wobei der Pfadprofil-Mikroprozessor dafür ausgelegt ist, die erfassten Daten zur vertikalen Abweichung mit den gespeicherten Profilen zu vergleichen.

13. Aktives Fahrwerk gemäß Anspruch 10, wobei der Pfadprofil-Mikroprozessor dafür ausgelegt ist, das abgerufene Profil zu ändern und das geänderte Profil in der Profilspeichervorrichtung zu speichern.

14. Verfahren für den Betrieb eines Landfahrzeugs (10) entlang eines Pfads mit Störungen, wobei das Landfahrzeug über ein aktives Fahrwerk gemäß einem der Ansprüche 1 bis 13 verfügt, um ein Nutzlastabteil (16) abzufedern, und das Landfahrzeug ferner über eine Oberflächeneingriffsvorrichtung (14) verfügt, wobei das Verfahren Folgendes umfasst:
Ausgeben von Befehlen an das steuerbare Fahrwerkelement (18) in Reaktion auf eine vertikale Störung im Pfad, wobei das steuerbare Fahrwerkelement eine Kraft abgibt, um den Abstand zwischen dem Nutzlastabteil (16) und der Oberflächeneingriffsvorrichtung (14), bevor die Oberflächeneingriffsvorrichtung auf eine vertikale Aufwärtsstörung trifft, zu verlängern, eine Kraft abgibt, um den Abstand zwischen dem Nutzlastabteil (16) und der Oberflächeneingriffsvorrichtung (14) zu verringern, während die Oberflächeneingriffsvorrichtung über die vertikale Aufwärtsstörung fährt, und beginnt, eine Kraft auszugeben, um den Abstand zwischen dem Nutzlastabteil (16) und der Oberflächeneingriffsvorrichtung (14) wieder zu vergrößern, während die Oberflächeneingriffsvorrichtung den Scheitel der vertikalen Aufwärtsstörung passiert.

## Revendications

1. Suspension active, pour un véhicule terrestre (10) destiné à opérer le long d'un trajet et incluant un compartiment à charge utile (16) et un dispositif de mise en contact avec une surface (14), ladite suspension active comprenant :
un élément de suspension pilotable (18) pour modifier le déplacement entre ledit compartiment à charge utile et ledit trajet sensible à des perturbations verticales dans ledit trajet, ledit élément de suspension pilotable étant un élément d'application de forces lequel couple ledit compartiment à charge utile audit dispositif de mise en contact avec une surface afin d'appliquer une force entre ledit compartiment à charge utile et ledit dispositif de mise en contact avec une surface dans le but de raccourcir ou d'allonger la distance entre ledit compartiment à charge utile et ledit dispositif de mise en contact avec une surface ; et
un sous-système (20) pour émettre des instructions audit élément de suspension pilotable afin d'obliger ledit élément de suspension pilotable à exercer une force qui est sensible à une perturbation verticale dans ledit trajet, **caractérisé en ce que**
ledit sous-système (20) est agencé de façon à
exercer une force destinée à provoquer une augmentation de la distance entre ledit compartiment à charge utile (16) et ledit dispositif de mise en contact avec une surface (14) avant que ledit dispositif de mise en contact avec une surface ne rencontre une perturbation ascendante verticale,
exercer une force destinée à provoquer une diminution de la distance entre ledit compartiment à charge utile (16) et ledit dispositif de mise en contact avec une surface (14) au fur et à mesure que ledit dispositif de mise en contact avec une surface se déplace au-dessus de ladite perturbation verticalement ascendante, et
commencer à exercer une force destinée à augmenter de nouveau la distance entre ledit compartiment à charge utile (16) et ledit dispositif de mise en contact avec une surface (14) au fur et à mesure que ledit dispositif de mise en contact avec une surface passe sur le sommet de ladite perturbation verticalement ascendante.

2. Suspension active selon la revendication 1, ledit sous-système (20) étant un sous-système de développement de trajectoire qui émet des instructions pour que ledit élément de suspension pilotable (18) oblige un point sur ledit compartiment à charge utile (16) de suivre un plan de trajectoire, le plan de trajectoire comprenant un trajet prédéterminé dans l'espace.

3. Suspension active selon la revendication 2, ledit trajet ayant un profil qui est décrit par des données de profil, ledit système de développement de trajectoire comprenant en outre un microprocesseur de développement de plans de trajectoire pour développer un plan de trajectoire sur la base des données de profil.

4. Suspension active selon la revendication 3, ledit système de développement de trajectoire incluant un dispositif de lissage destiné à lisser lesdites données de profil afin de développer ledit plan de trajectoire.

5. Suspension active selon la revendication 4, ledit dispositif de lissage comprenant un filtre passe-bas.

6. Suspension active selon la revendication 5, ledit dispositif de lissage comprenant un filtre passe-bas bidirectionnel.

7. Système de suspension active selon la revendication 4 ou la revendication 5, le sous-système de développement de trajectoire comprenant en outre :
un système de localisation (24) pour déterminer la localisation dudit véhicule terrestre (10) ;
un dispositif de stockage de plans de trajectoire (25) pour stocker une base de données pour des plans de trajectoire correspondant à des localisations ; et
un microprocesseur de plans de trajectoire (20) pour déterminer si ladite base de données contient un plan de trajectoire qui correspond à ladite localisation ayant été déterminée, pour récupérer ledit plan de trajectoire correspondant, et pour transmettre à ladite suspension active des signaux d'instruction basés sur ledit plan de trajectoire correspondant.

8. Suspension active selon la revendication 7, ledit système de localisation comprenant un dispositif à système de positionnement mondial.

9. Suspension active selon la revendication 7, le système de localisation comprenant :
un capteur de profil pour capter un profil dudit trajet ;
un dispositif de stockage de profils de chaussée pour stocker une base de données pour des profils de trajet ; et
un microprocesseur de profils de trajet couplé audit dispositif de stockage et audit capteur de profil afin de comparer ledit profil détecté avec ladite base de données de profils de trajet.

10. Suspension active selon la revendication 9, le microprocesseur de profils de trajet, basé sur la comparaison, récupérant un profil lequel correspond au trajet sur lequel le véhicule se déplace à ce moment-là.

11. Système de suspension active selon la revendication 9, le capteur de profils effectuant la saisie de données de déflexions verticales associées au trajet.

12. Système de suspension active pour véhicules selon la revendication 11, ledit microprocesseur de profils de trajet étant conçu de façon à comparer lesdites données de déflexions verticales ayant été saisies avec lesdits profils stockés.

13. Système de suspension active pour véhicules selon la revendication 10, ledit microprocesseur de profils de trajet étant conçu de façon à modifier ledit profil récupéré et à stocker ledit profil modifié dans ledit dispositif de stockage de profils.

14. Procédé destiné à opérer un véhicule terrestre (10) le long d'un trajet présentant des perturbations, le véhicule terrestre possédant une suspension active selon l'une quelconque des revendications 1 à 13 pour suspendre un compartiment à charge utile (16), et le véhicule terrestre possédant en outre un dispositif de mise en contact avec une surface (14), le procédé comprenant les opérations consistant à :
émettre des instructions à l'élément de suspension pilotable (18) sensible à une perturbation verticale dans ledit trajet, l'élément de suspension pilotable produisant une force destinée à allonger la distance entre le compartiment à charge utile (16) et le dispositif de mise en contact avec une surface (14) avant que le dispositif de mise en contact avec une surface ne rencontre dans le trajet une perturbation ascendante verticale, produire une force qui provoque une diminution de la distance entre ledit compartiment à charge utile (16) et ledit dispositif de mise en contact avec une surface (14) au fur et à mesure que ledit dispositif de mise en contact avec une surface se déplace au-dessus de ladite perturbation verticalement ascendante, et commencer à produire une force destinée à augmenter de nouveau la distance entre ledit compartiment à charge utile (16) et ledit dispositif de mise en contact avec une surface (14) au fur et à mesure que ledit dispositif de mise en contact avec une surface passe sur le sommet de ladite perturbation verticalement ascendante.
